Europäisches Patentamt

European Patent Office

Office européen des brevets

(11) Veröffentlichungsnummer : **0 079 529**
**B1**

(12) **EUROPÄISCHE PATENTSCHRIFT**

(45) Veröffentlichungstag der Patentschrift :
22.01.86

(21) Anmeldenummer : 82110152.4

(22) Anmeldetag : 04.11.82

(51) Int. Cl.⁴ : **C 08 L 81/04, C 08 K 3/00**

(54) **Bariumoxid-Paste.**

(30) Priorität : 06.11.81 DE 3144080

(43) Veröffentlichungstag der Anmeldung :
25.05.83 Patentblatt 83/21

(45) Bekanntmachung des Hinweises auf die Patenterteilung : 22.01.86 Patentblatt 86/04

(84) Benannte Vertragsstaaten :
**CH DE FR GB LI NL**

(56) Entgegenhaltungen :
US-A- 3 455 854
US-A- 3 645 956

(73) Patentinhaber : **RIEDEL-DE HAEN AKTIENGESELL-SCHAFT**
**Wunstorfer Strasse 40**
**D-3016 Seelze 1 (DE)**

(72) Erfinder : **Hirschberg, Rudolf, Dr.**
**Schillerstrasse 13.**
**D-3052 Bad Nenndorf (DE)**
Erfinder : **Krampitz, Horst**
**Apelerner Strasse 20**
**D-3255 Pohle (DE)**

(74) Vertreter : **Meyer-Dulheuer, Karl-Hermann, Dr. et al**
**HOECHST Aktiengesellschaft Zentrale Patentabteilung Postfach 80 03 20**
**D-6230 Frankfurt/Main 80 (DE)**

## 0 079 529

**Beschreibung**

Die Erfindung bezieht sich auf eine Bariumoxid-Paste, die als Verpastungsmittel eine ölige organische Flüssigkeit enthält.

Es ist bekannt, daß flüssige Polysulfide mit Hilfe eines Härters in Gegenwart eines Trocknungs- und Beschleunigungsmittels gehärtet werden. Als Trocknungsmittel werden unter anderem Alkali- und Erdalkalioxide eingesetzt, insbesondere Bariumoxid (vgl. US-Patentschrift 3 225 017). Das Bariumoxid wird dabei in Form einer 50-prozentigen Dispersion mit einem hydrierten Terphenyl als Dispersionsmittel verwendet.

Aufgabe der Erfindung ist die Bereitstellung einer Komposition mit einem hohen Bariumoxid-Gehalt, die lagerstabil ist und gefahrlos verarbeitet werden kann.

Die Erfindung betrifft nun eine Bariumoxid-Paste, die dadurch gekennzeichnet ist, daß sie aus einem Gemisch aus 70 bis 95 Gewichtsprozent Bariumoxid und 5 bis 30 Gewichtsprozent eines 1, 2 oder 3 Ethergruppen enthaltenden, öligen Kohlenwasserstoffes mit mindestens 8 Kohlenstoffatomen besteht.

Die erfindungsgemäße Bariumoxid-Paste besteht vorzugsweise aus 75 bis 90 Gewichtsprozent Bariumoxid und 10 bis 25 Gewichtsprozent des Ethergruppen enthaltenden Kohlenwasserstoffes.

Das Bariumoxid hat zweckmäßigerweise einen Reinheitsgrad von mindestens 80 Prozent, vorzugsweise 90 bis 98 Prozent. Der durchschnittliche Partikeldurchmesser des Bariumoxids in der Paste liegt im allgemeinen im Bereich von 0,5 bis 50 $\mu$m, vorzugsweise 1 bis 10 $\mu$m.

Als Verpastungsmittel für das Bariumoxid dient ein flüssiger Kohlenwasserstoff von ölartiger Konsistenz mit mindestens 8 Kohlenstoffatomen, vorzugsweise 9 bis 18 Kohlenstoffatomen, der 1, 2 oder 3 Ethergruppierungen aufweist. Besonders geeignete Ether sind solche mit Phenoxy-Gruppen. Der Ether kann auch noch andere funktionelle Gruppen enthalten, z. B. eine Formalgruppe. Vorteilhaft sind solche Ether, die gleichzeitig als Weichmacher für schwefelhaltige Polymere wirken. Geeignete Verbindungen sind Ethylbenzylether, Dibenzylether, Trimethoxybenzol und vor allem Di(phenoxyethyl)-formal. Statt eines einzigen Verpastungsmittels kann auch ein Gemisch verschiedener Verpastungsmittel eingesetzt werden.

Die erfindungsgemäße Bariumoxid-Paste enthält gegebenenfalls noch zusätzlich ein Zusatzmittel, das ein Sedimentieren des Bariumoxids verhindert und dadurch die Lagerstabilität der Paste erhöht. Das Zusatzmittel ist in der Paste in einer Menge von 0,5 bis 10 Gewichtsprozent, vorzugsweise 1 bis 5 Gewichtsprozent, vorhanden (bezogen auf das Gemisch aus Bariumoxid und Verpastungsmittel). Geeignete Zusatzmittel sind insbesondere handelsübliche hochdisperse Kieselsäure, gefälltes Calciumcarbonat und Rizinusölderivate. Die Zusatzmittel können einzeln oder im Gemisch miteinander eingesetzt werden.

Die erfindungsgemäße Bariumoxid-Paste eignet sich als Hilfsmittel bei der Härtung von flüssigen Polysulfiden, die als Einkomponenten-Dichtungsmassen Verwendung finden. Sie ist durch eine hohe Lagerstabilität und Unempfindlichkeit gegen den Einfluß von Wasser ausgezeichnet.

Die folgenden Beispiele dienen zur näheren Erläuterung der Erfindung.

### Beispiel 1

800 g grobstückiges Bariumoxid mit einem Reinheitsgrad von 96 Prozent werden zusammen mit 200 g Di(phenoxyethyl)-formal in einer Kugelmühle unter Verwendung von Stahlkugeln mit einem Durchmesser von 1 cm 5 Stunden lang gemahlen. Man erhält eine gelbliche Paste, deren Bariumoxid-Partikel einen durchschnittlichen Durchmesser von 5 $\mu$m aufweisen. Bei Zusatz von 1 g Wasser bildet sich lediglich ein oberflächlicher Belag, aber es findet keine Zersetzung statt.

### Beispiele 2 bis 9

Bestimmte Mengen von Bariumoxid, Di(phenoxyethyl)-formal (DPF) und verschiedenen Zusatzmitteln werden analog Beispiel 1 zu Pasten vermahlen. Einzelheiten sind aus der nachstehenden Tabelle ersichtlich.

### Tabelle

| Bei-spiel | BaO-Menge (g) | DPF-Menge (g) | Zusatzmittel Art | Menge (g) | BaO-Partikel-Durchmesser ($\mu$m) |
|---|---|---|---|---|---|
| 2 | 750 | 200 | $CaCO_3$ | 50 | 5 |
| 3 | 800 | 180 | Kieselsäure | 20 | 5 |

2

(Fortsetzung)

| Bei-spiel | BaO-Menge (g) | DPF-Menge (g) | Zusatzmittel Art | Menge (g) | BaO-Partikel-Durchmesser (μm) |
|---|---|---|---|---|---|
| 4 | 800 | 180 | organisches Rizinusölderivat[1] | 20 | 5 |
| 5 | 800 | 180 | organisches Rizinusölderivat[2] | 20 | 5 |
| 6 | 800 | 170 | Kieselsäure | 10 | 5 |
|   |     |     | + organisches Rizinusölderivat[1] | 20 | 5 |
| 7 | 800 | 170 | Kieselsäure | 10 | 5 |
|   |     |     | + organisches Rizinusölderivat[2] | 20 | |
| 8 | 800 | 170 | Kieselsäure | 10 | 5 |
|   |     |     | + organisches Rizinusölderivat[1] | 10 | |
|   |     |     | + organisches Rizinusölderivat[2] | 10 | |
| 9 | 750 | 200 | organisches Rizinusölderivat[1] | 20 | 5 |
|   |     |     | + CaCO$_3$ | 30 | |

[1] Handelsprodukt der Firma Kronos Titan-GmbH, Leverkusen
[2] Handelsprodukt der Firma Cray Valley Products

Vergleichsbeispiel

Beispiel 1 wird wiederholt, wobei statt Di(phenoxyethyl)-formal nun Benzylbutylphthalat verwendet wird. Bei Zusatz von 1 g Wasser zu der erhaltenen Paste entsteht eine starke Rauchentwicklung, und ausgehend von der Kontaktstelle zersetzt sich die gesamte Paste. Die Zersetzung läßt sich durch Sand-, Trockeneis- oder Natriumbicarbonat-Zusatz nicht aufhalten.

**Patentansprüche**

1. Bariumoxid-Paste, dadurch gekennzeichnet, daß sie aus einem Gemisch aus 70 bis 95 Gewichtsprozent Bariumoxid und 5 bis 30 Gewichtsprozent eines 1, 2 oder 3 Ethergruppierungen enthaltenden öligen Kohlenwasserstoffs mit mindestens 8 Kohlenstofatomen besteht.

2. Paste nach Anspruch 1, dadurch gekennzeichnet, daß das Bariumoxid einen durchschnittlichen Partikeldurchmesser von 0,5 bis 50 μm aufweist.

3. Paste nach Anspruch 1, dadurch gekennzeichnet, daß der Kohlenwasserstoff als Weichmacher für schwefelhaltige Polymere geeignet ist.

· 4. Verwendung der Bariumoxid-Paste gemäß Anspruch 1 als Hilfsmittel für die Härtung von Polysulfiden in Dichtungsmassen.

**Claims**

1. Barium oxide paste characterized in that it consists of a mixture of from 70 to 95 percent by weight of barium oxide and from 5 to 30 percent by weight of an oily hydrocarbon having at least 8 carbon atoms and containing 1, 2 or 3 ether groupings.

2. Paste according to claim 1 characterized in that the barium oxide shows an average particle diameter of from 0.5 to 50 μm.

3. Paste according to claim 1 characterized in that the hydrocarbon is useful as plasticiser for sulfur containing polymers.

4. Use of the barium oxide paste according to claim 1 as auxiliary agent for the curing of polysulfides in sealing compounds.

**Revendications**

1. Pâte d'oxyde de baryum caractérisée en ce qu'elle est constituée d'un mélange de 70 à 95 % en poids d'oxyde de baryum et de 5 à 30 % en poids d'un hydrocarbure huileux contenant au moins 8 atomes de carbone et portant un, deux ou trois radicaux éthers.

2. Pâte selon la revendication 1 caractérisée en ce que l'oxyde de baryum a un diamètre particulaire moyen de 0,5 à 50 μm.

3. Pâte selon la revendication 1 caractérisée en ce que l'hydrocarbure convient comme plastifiant pour des polymères sulfurés.

4. Application de la pâte d'oxyde de baryum selon la revendication 1 comme adjuvant pour le durcissement de polysulfures dans des matières d'étanchéification.

4